# EUROPÄISCHE PATENTANMELDUNG

(11) **EP 3 572 594 A1**
(43) Veröffentlichungstag der Anmeldung: **27.11.2019**
(21) Anmeldenummer: 18174056.4
(22) Anmeldetag: 24.05.2018
(51) Int. Cl.: E04C 5/07, B29C 70/52, B29C 70/08, E04C 5/03

(54) **BEWEHRUNGSSTAB MIT ALKALIRESISTENTEM MANTEL**

(71) Anmelder: Solidian GmbH, 72458 Albstadt (DE)
(72) Erfinder: Hinzen, Marcus, Dr., 72458 Albstadt (DE)
(74) Vertreter: Rüger Abel Patentanwälte PartGmbB

(57) **Zusammenfassung**

Die Erfindung betrifft einen Bewehrungskörper (10) mit wenigstens einem Bewehrungsstrang (12). Der Bewehrungsstrang (12) hat ein in eine Matrix (14) eingebettetes Faserbündel (13). Das Faserbündel (13) besteht aus ersten Fasern (15) und zweiten Fasern (16), die sich insbesondere parallel zueinander erstrecken und insbesondere nicht miteinander verwoben sind. Die ersten Fasern (15) sind in einem Bündelkern (17) des Faserbündels (13) angeordnet. In dem Bündelkern (17) sind vorzugsweise ausschließlich erste Fasern (15) vorhanden. Ein Bündelmantel (18) umschließt den Bündelkern (17) in Umfangsrichtung um eine Mittelachse des Bewehrungsstrangs (12) vollständig. Durch den Bündelmantel (18) sind die ersten Fasern (15) geschützt und können beim Einbau des Bewehrungskörpers (10) in einen Baustoffkörper (19) nicht in Kontakt gelangen mit einem Baustoff des Baustoffkörpers (19). Vorzugsweise haben die zweiten Fasern (16) eine höhere Alkalibeständigkeit als die ersten Fasern (15).

## Beschreibung

Die Erfindung betrifft einen Bewehrungskörper, der zur Bewehrung eines Baustoffkörpers eingerichtet ist. Der Bewehrungskörper hat wenigstens einen Bewehrungsstrang, der ein in eine Matrix eingebettetes Faserbündel aufweist. Der Bewehrungskörper bildet somit eine Textilbewehrung und kann daher auch als Textilbewehrungskörper bezeichnet werden. Jeder Bewehrungsstrang kann einen Bewehrungsstab bilden. Der Bewehrungskörper kann eine oder mehrere Biegestellen aufweisen und beliebige zwei- oder dreidimensionale Formen annehmen.

Textilbewehrungsstränge und daraus hergestellte Bewehrungskörper sind bekannt. Abhängig von den verwendeten Materialien für die Fasern des Faserbündels können bestimmte mechanische Eigenschaften erreicht werden. In dem Fachartikel Ko et al., "Ductile Hybrid Fiber Reinforced Plastic Reinforcing Bar for Concrete Structures: Design Methodology", ACI Materials Journal, November-Dezember 1998, Seite 655 fortfolgende, wird ein Bewehrungsstab beschrieben, bei dem unterschiedliche Fasern miteinander verwoben werden, um eine gewünschte mechanische Eigenschaft des verwobenen Faserbündels zu erreichen.

Ein ähnlicher Bewehrungskörper ist auch bekannt aus Xu et al. "Analysis of Hybrid Effect of Two Hybrid Fiber CGFRP Bar and Its Mechanical Properties", Applied Mechanics and Materials, ISSN: 1662-7482, Vols. 166-169, Seiten 680-683, Trans Tech Publications, 2012.

Won et al., "Durability of hybrid FRB reinforcing bars in concrete structures exposed to marine environments", Int. J. Structural Engineering, Volume 4, Nos. 1/2, 2013, Seiten 63 fortfolgende offenbart einen Textilbewehrungsstab mit unterschiedlichen Zusammensetzungen verschiedener Fasern. Dabei können Fasern aus E-Glas, Aramid und Karbon in unterschiedlichen Anteilen in einem sogenannten Hybrid-Bewehrungsstab vorhanden sein.

Park, "Effect of the Volume Fraction of Jute Fiber on the Interlaminar Shear Stress and Tensile Behavior Characteristics of Hybrid Glass/Jute Fiber Reinforced Polymer Composite Bar for Concrete Structures", International Journal of Polymer Science, Volume 2016, Artikel-ID 3042392, Hindawi Publishing Corporation, offenbart einen Bewehrungsstab aufweisend unterschiedliche Anteile von Jutefasern und Glasfasern. Die Fasern sind in eine Matrix aus Vinylester eingebettet. Durch die unterschiedlichen Anteile der Fasermaterialien sollen die mechanischen Eigenschaften, insbesondere Duktilität und die interlaminare Scherfestigkeit eingestellt werden.

In der Praxis werden die meisten Baustoffkörper durch eine metallische Bewehrung verstärkt. Dies liegt hauptsächlich an den geringen Kosten. Aktuelle Preise für Hochleistungsfasern zur Verwendung in Faserbündeln für einen Bewehrungskörper sind deutlich höher als metallische Bewehrungskomponenten. Deshalb konnten sich Textilbewehrungen bislang bei vielen Anwendungen im Bausektor nicht durchsetzen, trotz einiger Vorteile, insbesondere im Hinblick auf das Gesamtgewicht des Baustoffkörpers.

Aufgabe der vorliegenden Erfindung ist es, einen Bewehrungskörper zu schaffen, der sich kostengünstiger herstellen lässt.

Diese Aufgabe wird durch einen Bewehrungskörper mit den Merkmalen des Patentanspruches 1 gelöst.

Der erfindungsgemäße Bewehrungskörper weist wenigstens einen Bewehrungsstrang auf. Jeder Bewehrungsstrang hat ein in eine Matrix eingebettetes Faserbündel aus einer Vielzahl von ersten Fasern und zweiten Fasern. Jeder der wenigstens einen Bewährungsstränge kann einen Bewehrungsstab bilden. Als Bewehrungskörper können ein oder mehrere sich jeweils geradlinig erstreckende Bewehrungsstäbe verwendet werden. Die Bewehrungsstäbe können in ihrer Erstreckungsrichtung eine Zugkraft aufnehmen und den Baustoffkörper dadurch bewehren. Als Bewehrungskörper können auch aus Stäben gebildete Gitter verwendet werden. Wenigstens ein Bewehrungsstab und/oder wenigstens ein Bewehrungsgitter eines Bewehrungskörpers kann eine oder mehrere Knick- oder Biegestellen aufweisen. Somit kann der Bewehrungskörper beliebige zwei- oder dreidimensionale Formen annehmen.

Der Bewehrungskörper ist vorzugsweise frei von metallischen Materialien.

Für die Matrix kann ein Kunststoffmaterial und/oder ein mineralisches Material verwendet werden, beispielsweise Epoxidharz, Vinylester, Polyurethan, Polyethylen, Polystyrol, ein Polysiloxan oder Acrylat. Es kann somit ein Material aus organischen und/oder anorganischen Bestandteilen verwendet werden.

Bei einer erfindungsgemäßen Variante sind die ersten Fasern aus einem Fasermaterial, das sich vom Fasermaterial der zweiten Fasern unterscheidet. Das Fasermaterial der ersten Fasern und/oder zweiten Fasern kann jeweils eine oder mehrere Bestandteile bzw. Komponenten aufweisen und/oder eine oder mehrere Lagen bzw. Schichten aus unterschiedlichen Komponenten aufweisen.

Die ersten Fasern sind in einem Bündelkern des Faserbündels angeordnet. Die zweiten Fasern bilden einen Bündelmantel des Faserbündels. Der Bündelmantel umschließt den Bündelkern in seiner Umfangsrichtung vollständig.

Im Bündelmantel sind die zweiten Fasern möglichst dicht gepackt angeordnet. Insbesondere können die zweiten Fasern lückenlos aneinander anliegen, um den geschlossenen Bündelmantel zu bilden. Die zweiten Fasern, die den Bündelmantel bilden, vermeiden somit einen unmittelbaren Kontakt zwischen einem Baustoff eines Baustoffkörpers und den ersten Fasern und schirmen die ersten Fasern nach außen gegen chemische Einwirkungen ab. Dadurch ist es möglich, das Fasermaterial der ersten Fasern unabhängiger von der chemischen Resistenz gegenüber dem Baustoff eines Baustoffkörpers zu wählen.

Die zweiten Fasern bestehen vorzugsweise aus einem Fasermaterial, das resistent ist gegen chemische Angriffe bzw. Zersetzung durch den Baustoff eines Baustoffkörpers. Insbesondere sind die zweiten Fasern alkaliresistent. Die zweiten Fasern können eine höhere Alkalibeständigkeit aufweisen als die ersten Fasern. Dadurch kann für die ersten Fasern ein günstigeres Fasermaterial verwendet werden als für die zweiten Fasern. Durch den Bündelmantel aus den zweiten Fasern sind die ersten Fasern vor chemischen Angriffen des Baustoffes geschützt. Die Zugfestigkeit des Faserbündels wird durch einen chemischen Angriff, insbesondere alkalischen Angriff des Baustoffes trotz Verwendung des günstigeren Fasermaterials im Kern nicht wesentlich herabgesetzt. Die Zugfestigkeit des Baustoffkörpers bleibt weitestgehend erhalten, da die zweiten Fasern im Mantel von ihrer hohen Alkalibeständigkeit und die ersten Fasern im Kern von ihrem Abstand zum alkalischen Baustoff profitieren.

Bei der bevorzugten Ausführungsform enthalten die ersten Fasern E-Glas und/oder ECR-Glas. Die ersten Fasern können auch vollständig aus E-Glas oder ECR-Glas bestehen.

Die zweiten Fasern können bei einem Ausführungsbeispiel aus AR-Glas bestehen oder zumindest AR-Glas aufweisen.

Wenn sowohl die ersten Fasern als auch die zweiten Fasern aus Glas bestehen, sind die Wärmeausdehnungskoeffizienten gleich groß und es kann bei Temperaturschwankungen nicht zu Eigenspannungen im Bewehrungskörper kommen, die die Zugfestigkeit negativ beeinträchtigen.

Bei einer vorteilhaften Ausführungsform können die zweiten Fasern als Bikomponentenfasern ausgebildet sein. Die zweiten Fasern können einen Faserkern sowie einen den Faserkern in Umfangsrichtung vollständig umschließenden Fasermantel aufweisen. Der Fasermantel kann eine höhere Alkalibeständigkeit aufweisen als der Faserkern. Vorzugsweise kann der Fasermantel aus AR-Glas bestehen. Es ist dabei vorteilhaft, wenn der Faserkern aus E-Glas oder aus ECR-Glas besteht.

Insbesondere kann der Volumen- und/oder Masseanteil der zweiten Fasern geringer sein als der Volumen- und/oder Masseanteil der ersten Fasern. Bei einem Ausführungsbeispiel kann der Volumen- und/oder Masseanteil der ersten und zweiten Fasern auch gleich groß sein. Bevorzugt liegt der Volumen- und/oder Masseanteil der zweiten Fasern am Gesamtvolumen bzw. an der Gesamtmasse des Faserbündels im Bereich von 30% bis 60%. Dementsprechend kann der Volumen- und/oder Masseanteil der ersten Fasern im Bereich von 40% bis 70% liegen.

Bei einer weiteren erfindungsgemäßen Variante weist die Matrix des Bewehrungsstrangs ein erstes Matrixmaterial, in das die ersten Fasern eingebettet sind, und ein sich von dem ersten Matrixmaterial unterscheidendes zweites Matrixmaterial auf, in das die zweiten Fasern eingebettet sind.

In einer weiteren möglichen Ausführungsform unterscheidet sich das erste Matrixmaterial von dem zweiten Matrixmaterial. Bevorzugt weist das zweite Matrixmaterial eine höhere Alkalibeständigkeit auf als dass erste Matrixmaterial, wobei das erste Matrixmaterial brandbeständiger sein kann als das zweite Matrixmaterial. Zumindest das erste Matrixmaterial kann zumindest eine siliziumorganische Verbindung, wie z.B. ein Polysiloxan, enthalten. Das erste Matrixmaterial besteht bevorzugt aus einer einzigen siliziumorganischen Verbindung. Üblicherweise weist sowohl das erste als auch das zweite Matrixmaterial zumindest eine siliziumorganische Verbindung auf.

Als erste und zweite Fasern werden vorzugsweise Fasern eingesetzt, die eine hohe Brandbeständigkeit aufweisen. Insbesondere können die ersten und die zweiten Fasern Karbonfasern oder Basaltfasern sein. Karbonfasern weisen eine vergleichsweise hohe Brandbeständigkeit auf, wenn sie durch das Matrixmaterial ausreichend gut vor Sauerstoff geschützt sind. Mit dieser Ausführungsform sind Bewehrungskörper herstellbar, die sowohl ausreichend alkalibeständig sind als auch eine gute Brandbeständigkeit aufweisen. Bevorzugt können die ersten und auch die zweiten Fasern aus Karbon bestehen. Alternativ können die ersten und auch die zweiten Fasern aus Basalt bestehen. Bevorzugt wird die Verwendung von Fasern aus Karbon und Fasern aus Basalt in einem gemeinsamen Bewehrungsstrang vermieden, da sich, zumindest bislang, eine derartige Kombination von Basalt- und Karbonfasern nicht bewährt hat und Karbon- und Basaltfasern mechanisch nicht oder schlecht kompatibel sind.

Bei einem bevorzugten Ausführungsbeispiel des Bewehrungskörpers kann an dem Bündelmantel außen, auf der dem Bündelkern abgewandten Seite, eine Rippenstruktur mit wenigstens einer Rippe angeordnet sein. Der Bündelmantel trennt die Rippenstruktur von dem Bündelkern. Durch die Rippenstruktur wird die Verankerung des Bewehrungskörpers in der Baustoffmatrix des Baustoffkörpers verbessert.

Die wenigstens eine Rippe der Rippenstruktur weist bei einem bevorzugten Ausführungsbeispiel dritte Fasern auf, die in eine Matrix eingebettet sind. Die dritten Fasern können aus demselben Material bestehen wie die ersten Fasern und beispielsweise E-Glas oder ECR-Glas aufweisen oder vollständig aus E-Glas oder ECR-Glas hergestellt sein. Die dritten Fasern können aus anderen Fasermaterialien hergestellt sein als die ersten und/oder zweiten Fasern und beispielsweise Basalt und/oder Polypropylen aufweisen oder aus Basalt oder Polypropylen bestehen.

Bei einer bevorzugten Ausführungsform kann die Matrix des Bewehrungsstranges aus einem einheitlichen Material, insbesondere Kunststoffmaterial, bestehen. Alternativ hierzu ist es auch möglich, dass die Matrix wenigstens zwei verschiedene Matrixmaterialien aufweist, beispielsweise ein erstes Matrixmaterial, in das die ersten Fasern eingebettet sind, und ein zweites Matrixmaterial, in das die zweiten Fasern eingebettet sind. Die beiden Matrixmaterialien können sich voneinander unterscheiden und beispielsweise durch unterschiedliche Kunststoffe gebildet sein.

Als erstes Matrixmaterial und/oder als zweites Matrixmaterial kann beispielsweise Epoxidharz, Vinylester, Polyurethan, Polyethylen, Polystyrol, Acrylat oder eine siliziumorganische Verbindung (Polysiloxan) verwendet werden. Es ist insbesondere bevorzugt, wenn das zweite Matrixmaterial eine höhere Alkalibeständigkeit aufweist als das erste Matrixmaterial.

Bei einer bevorzugten Ausführungsform ist der E-Modul der zweiten Fasern im Wesentlichen gleich groß wie der E-Modul der ersten Fasern. Die gesamte Steifigkeit des Bewehrungsstranges wird somit sowohl durch die ersten Fasern, als auch die zweiten Fasern bereitgestellt. Die ersten Fasern und die zweiten Fasern verlaufen im Wesentlichen parallel zueinander in der jeweiligen Erstreckungsrichtung des Bewehrungsstranges. Zumindest in allen Bereichen, in denen der Bewehrungsstrang linear verläuft, sind die ersten Fasern und die zweiten Fasern bevorzugt parallel zueinander orientiert. Weist ein Bewehrungsstrang einen Knick- oder Biegestelle auf, verlaufen die Fasern aufgrund der unterschiedlichen Knick- und Biegeradien an der Innen- und der Außenseite der Biegung an der Biegestelle nicht parallel zueinander.

Es ist vorteilhaft, wenn die Fasern des Faserbündels nicht verwoben sind. Insbesondere sind weder die ersten Fasern untereinander, noch die zweiten Fasern untereinander, noch die ersten Fasern mit den zweiten Fasern verwoben. Dadurch kann eine Streckung der Fasern erreicht und deren Welligkeit reduziert werden, was die Zugfestigkeit eines mit dem Bewehrungskörper bewehrten Baustoffkörpers verbessert.

Die beiden erfindungsgemäßen Varianten können einzeln oder in Kombination miteinander verwendet werden. Die vorteilhaften Ausgestaltungen, die im Zusammenhang mit den beiden erfindungsgemäßen Varianten erläutert wurden, können jeweils bei einer oder beiden erfindungsgemäßen Varianten verwendet werden,

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:
Figuren 1-4 jeweils eine schematische Darstellung eines Ausführungsbeispiels eines Bewehrungskörpers in Form eines Bewehrungsstabes,
Figur 5 einen Längsschnitt durch ein Ausführungsbeispiel eines Bewehrungskörpers,
Figur 6 einen Querschnitt durch das Ausführungsbeispiel des Bewehrungskörpers aus Figur 5,
Figur 7 einen Querschnitt durch ein weiteres Ausführungsbeispiel eines Bewehrungskörpers,
Figur 8 einen Querschnitt durch ein Ausführungsbeispiel einer zweiten Faser des Bewehrungskörpers, die als Bikomponentenfaser ausgebildet ist,
Figur 9 einen Längsschnitt durch ein weiteres Ausführungsbeispiel eines Bewehrungskörpers mit einer Rippenstruktur,
Figur 10 einen schematischen Querschnitt durch eine Rippe der Rippenstruktur aus Figur 9 und
Figuren 11-14 jeweils eine schematische Teildarstellung unterschiedlicher Baustoffkörper mit unterschiedlich gestalteten Bewehrungskörpern.

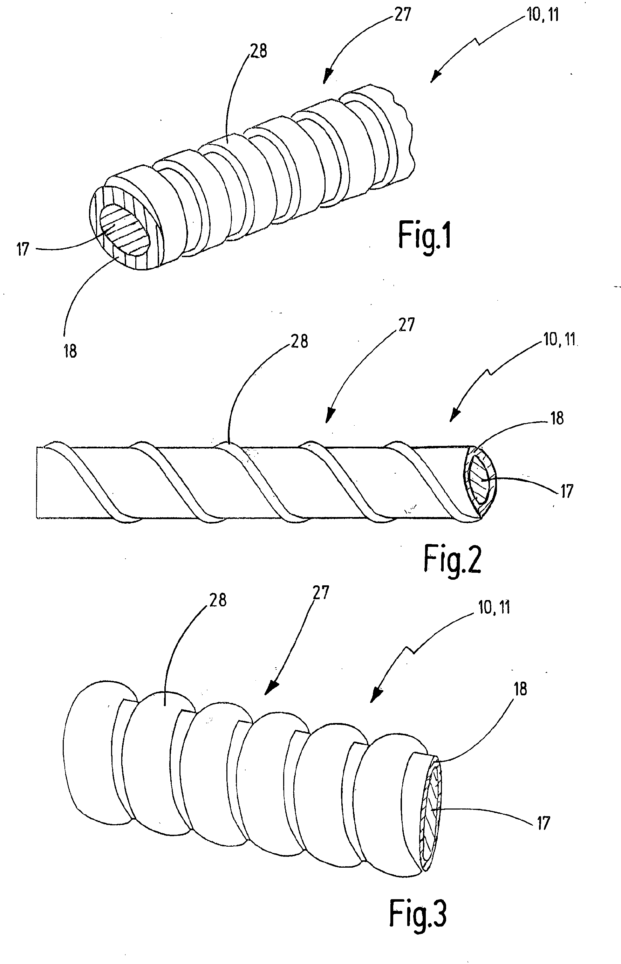

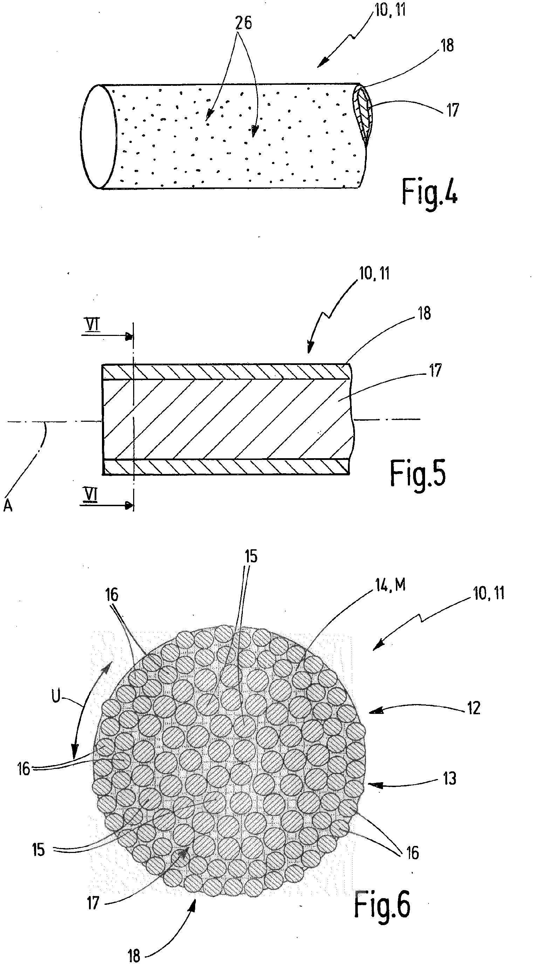

In den Figuren 1-5 sind unterschiedliche Ausführungsbeispiele eines Bewehrungskörpers 10 jeweils in Form eines sich linear erstreckenden Bewehrungsstabes 11 veranschaulicht. Figur 6 zeigt einen Querschnitt durch den Bewehrungsstab 11 gemäß Schnittlinie VI-VI in Figur 5.

Zunächst sei auf die Figuren 5 und 6 Bezug genommen. Im Längsschnitt nach Figur 5 und im Querschnitt nach Figur 6 ist zu erkennen, dass jeder Bewehrungsstab 11 genau einen Bewehrungsstrang 12 aufweist, der sich in der Erstreckungsrichtung des Bewehrungsstabes 11, parallel zu einer Längsmittelachse A erstreckt. Jeder Bewehrungsstrang 12 weist ein Faserbündel 13 auf, das in eine Matrix 14 eingebettet ist. Erfindungsgemäß hat das Faserbündel 13 erste Fasern 15 aus einem Fasermaterial und zweite Fasern 16 aus einem anderen Fasermaterial, das sich von dem Fasermaterial der ersten Fasern 15 unterscheidet. Die ersten Fasern 15 sind in einem Bündelkern 17 im Inneren des Faserbündels 13 angeordnet. In einer Umfangsrichtung U um die Längsmittelachse A des Bewehrungsstabes 11 bzw. des Bewehrungsstrangs 12 ist der Bündelkern 17 vollständig vom Bündelmantel 18 umschlossen. Die Mantelfläche des Bewehrungsstrangs 12 bzw. des Bewehrungsstabes 11 ist daher ausschließlich durch die in die Matrix 14 eingebetteten zweiten Fasern 16 gebildet.

Das Faserbündel 13 kann aus Rovings hergestellt werden. Im Bündelkern 17 des Faserbündels 13 sind ausschließlich erste Fasern 15 und im Bündelmantel 18 des Faserbündels 13 sind ausschließlich zweite Fasern 16 vorhanden. Beispielsgemäß liegt der Volumen- und/oder Masseanteil der zweiten Fasern 16 am Gesamtvolumen bzw. an der Gesamtmasse des Faserbündels im Bereich von 30% bis 60%. Dementsprechend kann der Volumen- und/oder Masseanteil der ersten Fasern im Bereich von 40% bis 70% liegen.

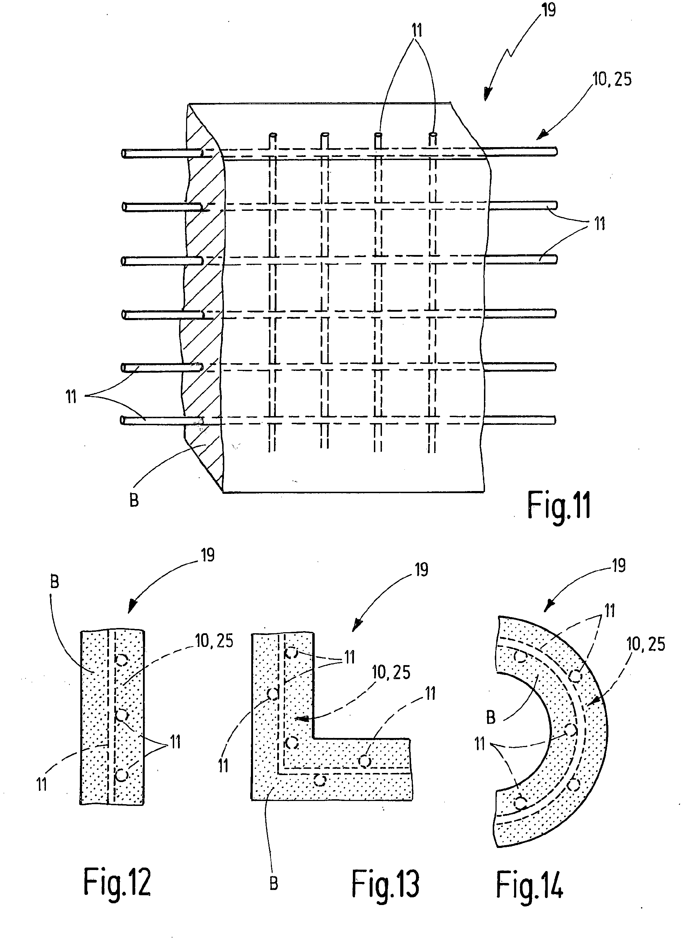

Wird der Bewehrungskörper 10 in eine Baustoffmatrix B eines Baustoffkörpers 19 eingebettet (Figuren 11-14), so gelangt der Baustoff B an der Mantelfläche nicht in Kontakt mit den ersten Fasern 15 im Bündelkern 17, sondern lediglich mit den zweiten Fasern 16 im Bündelmantel 18. Der Bündelmantel 18 schirmt den Bündelkern 17 mit den ersten Fasern 15 sozusagen gegen einen direkten Kontakt und chemische Einwirkungen der Baustoffmatrix B bzw. dem Baustoff des Baustoffkörpers 19 ab.

Als Baustoff für die Baustoffmatrix kann beispielsweise Beton oder Mörtel verwendet werden. Häufig hat die Baustoffmatrix B einen basischen pH-Wert von bis zu 13,5. Dadurch ist der Bewehrungskörper 10 einem alkalischen Angriff ausgesetzt. Über Diffusionsprozesse können Alkaliionen mit zunehmender Zeitdauer in den Bewehrungskörper 10 eindringen, die Faser schädigen und die Zugfestigkeit des Bewehrungskörpers 10 bzw. des Bewehrungsstrangs 12 mindern. Aus diesem Grund weisen die zweiten Fasern 16 im Bündelmantel 18 beispielsgemäß eine höhere Alkalibeständigkeit als die ersten Fasern 15 im Bündelkern 17. Vorzugsweise ist das Fasermaterial der zweiten Fasern 16 alkaliresistenter, so dass deren Zugfestigkeit durch Alkaliionen weniger stark angegriffen wird.

Beispielsweise können die zweiten Fasern 16 aus einem alkalibeständigen Fasermaterial hergestellt sein, wie etwa AR-Glas.

Das Fasermaterial für die zweiten Fasern 16 ist teuer. Aus diesem Grund weist der Bewehrungsstrang 12 im Bündelkern 17 vorzugsweise ausschließlich erste Fasern 15 aus einem anderen Fasermaterial auf, beispielsweise E-Glas oder ECR-Glas oder Basalt. Dieses Fasermaterial ist kostengünstiger als AR-Glas. Dadurch wird der Gesamtpreis des Faserbündels 13 reduziert. Dennoch ist das Faserbündel 13 beständig gegen einen alkalischen Angriff der Baustoffmatrix B, da die ersten Fasern 15 im Bündelkern 17 durch die zweiten Fasern 16 im Bündelmantel 18 gegen den direkten Kontakt mit der Baustoffmatrix B abgeschirmt sind. Die Zugfestigkeit des Faserbündels 13 bzw. des Bewehrungsstrangs 12 bleibt daher auch über lange Zeit im Baustoffkörper 19 aufrecht erhalten und der Baustoffkörper 19 wird durch den Alkaliangriff auf den Bewehrungskörper 10 nicht oder nicht wesentlich geschwächt.

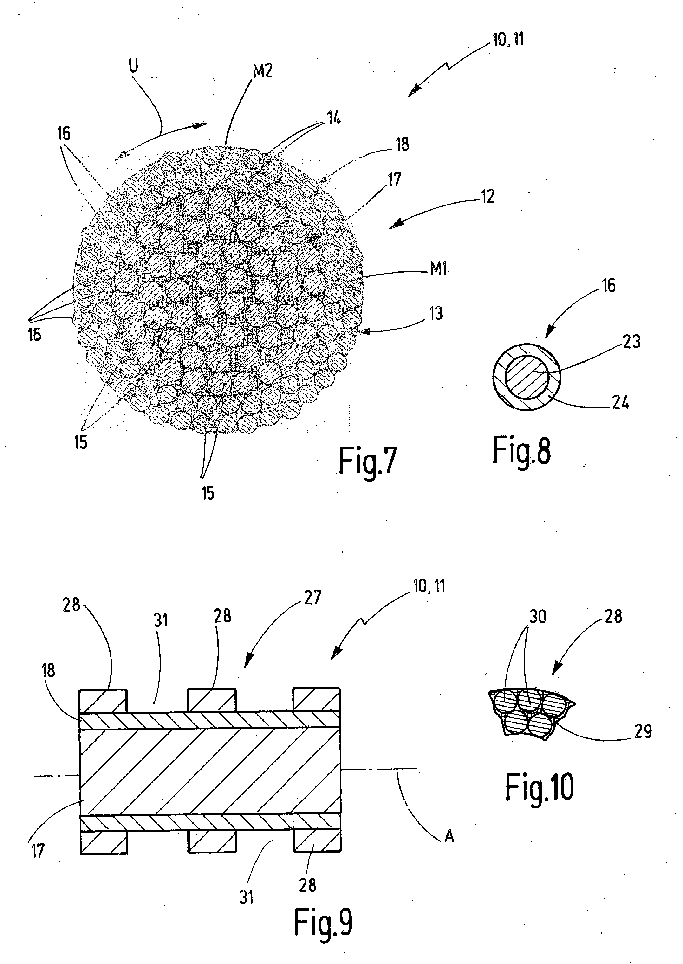

Bei den in den Figuren 5 und 6 veranschaulichten Beispiel besteht die Matrix 14 des Bewehrungsstrangs 12 aus einem einheitlichen Matrixmaterial M. In Abwandlung hierzu ist in Figur 7 ein Querschnitt durch ein weiteres Ausführungsbeispiel eines Bewehrungsstrangs 12 eines Bewehrungskörpers 10 bzw. eines Bewehrungsstabes 11 gezeigt, bei dem die Matrix 14 aus einem ersten Matrixmaterial M1 und einem davon verschiedenen zweiten Matrixmaterial M2 besteht. In das erste Matrixmaterial M1 sind die ersten Fäden 15 und in das zweite Matrixmaterial M2 sind die zweiten Fasern 16 eingebettet. Somit befindet sich das erste Matrixmaterial M1 im Bündelkern 17 und das zweite Matrixmaterial M2 im Bündelmantel 18 des Faserbündels 13. Es ist dabei vorteilhaft, wenn das zweite Matrixmaterial eine höhere Alkalibeständigkeit aufweist als das erste Matrixmaterial M1.

Das Matrixmaterial M oder das erste Matrixmaterial M1 oder das zweite Matrixmaterial M2 können aus mineralischem Material oder bevorzugt aus Kunststoffmaterial bestehen. Als Kunststoffmaterial für die Matrix 14 kann Epoxidharz oder Vinylester oder Polyurethan oder Polyethylen oder Polystyrol oder Acrylat verwendet werden. Alternativ können auch siliziumorganische Verbindungen, z.B. Polysiloxane, als Matrixmaterial verwendet werden.

Das zweite Matrixmaterial M2 kann eine höhere Alkalibeständigkeit und/oder Brandbeständigkeit aufweisen als das erste Matrixmaterial M1.

In Figur 8 ist eine weitere Ausführungsform einer zweiten Faser 16 schematisch im Querschnitt veranschaulicht. Die zweite Faser ist bei diesem Ausführungsbeispiel als Bikomponentenfaser mit einem Faserkern 23 und einem den Faserkern 23 vollständig umschließenden Fasermantel 24 ausgebildet. Der Faserkern kann dabei aus dem gleichen Fasermaterial bestehen wie die ersten Fasern 15. Der Fasermantel 24 besteht vorzugsweise aus einem Fasermaterial mit höherer Alkalibeständigkeit als der Faserkern 23, insbesondere aus AR-Glas. Es ist somit ausreichend, den Fasermantel 24 der zweiten Faser 16 alkalibeständig auszuführen.

Wie es anhand der Figuren 6 und 7 schematisch veranschaulicht ist, erstrecken sich die ersten Fasern 15 und die zweiten Fasern 16 im Wesentlichen parallel zueinander in derselben Richtung entlang der Längsmittelachse A des Bewehrungsstrangs 12. An Knick- oder Biegestellen kann es aufgrund der radial innen und radial außen unterschiedlichen Knick- oder Biegeradien zu Abweichungen der Parallelität der Fasern 15, 16 von der Längsmittelachse A kommen. Außerhalb solcher Knick- oder Biegestellen sind sowohl die ersten Fasern 15, als auch die zweiten Fasern 16 vorzugsweise gestreckt parallel zur Längsmittelachse A ausgerichtet. Insbesondere sind die Fasern 15, 16 weder innerhalb des Bündelkerns 17, noch innerhalb des Bündelmantels 18 und auch nicht zwischen Bündelmantel 18 und Bündelkern 17 miteinander verwoben. Durch die gestreckte Lage der Fasern 15, 16 kann die Zugfestigkeit des Bewehrungskörpers 10 und mithin des Baustoffkörpers 19 erhöht werden.

Bei dem hier beschriebenen Ausführungsbeispiel ist die Wärmeausdehung und/oder der E-Modul der zweiten Fasern 16 im Wesentlichen gleich groß wie die Wärmeausdehung bzw. der E-Modul der ersten Fasern 15, insbesondere wenn die ersten Fasern 15 aus E-Glas oder ECR-Glas hergestellt sind und die zweiten Fasern 16 AR-Glas aufweisen oder aus AR-Glas bestehen.

In den Figuren 11-14 sind schematisch verschiedene Ausführungen eines Bewehrungskörpers 10 veranschaulicht. Bei diesem Beispiel weist der Bewehrungskörper 10 mehrere Bewehrungsstäbe 11 auf. Wie es in den Figuren 11 und 12 veranschaulicht ist, können die Bewehrungsstäbe 11 an Kreuzungsstellen aneinander anliegen bzw. miteinander verbunden sein und somit einen Bewehrungskörper 10 in Form eines Bewehrungsgitters 25 bilden, das sich im Wesentlichen parallel zu einer Ebene erstreckt.

In Abwandlung hierzu kann wenigstens ein Bewehrungsstab 11 und/oder ein durch mehrere Bewehrungsstäbe 11 gebildete Bewehrungsgitter 25 wenigstens eine Knick- oder Biegestelle aufweisen, wie es beispielhaft in den Figuren 13 und 14 für weitere Ausführungsbeispiele von Baustoffkörpern 19 gezeigt ist. Im Prinzip lässt sich aus einem oder mehreren Bewehrungsstäben 11 eine beliebige zweidimensionale oder dreidimensionale Gestalt für einen Bewehrungskörper 10 herstellen.

Um die Verankerung des Bewehrungskörpers 10 und beispielsgemäß jedes Bewehrungsstabes 11 in der Baustoffmatrix B zu verbessern, kann beispielsweise die Oberflächenrauheit der Umfangsfläche des Bewehrungsstabes 11 erhöht werden, beispielsweise durch Besanden mit Sand 26, wie es schematisch in Figur 4 veranschaulicht ist.

Zusätzlich oder alternativ kann außen auf den Bündelmantel 18 eine Rippenstruktur 27 mit wenigstens einer Rippe 28 angeordnet sein. Bei den Ausführungsbeispielen gemäß den Figuren 1-3 hat die Rippenstruktur 27 eine einzige schraubenförmige bzw. helixförmige Rippe 28. Die Querschnittsform der schraubenförmigen Rippe 28 kann variieren. Bei dem in Figur 1 veranschaulichten Ausführungsbeispiel hat die Rippe 28 einen im Wesentlichen rechteckförmigen Querschnitt. Beim Ausführungsbeispiel gemäß der Figuren 2 und 3 ist der Querschnitt der Rippe 28 mit Blick von außen auf den Bewehrungsstab 11 konvex gewölbt. Die Ganghöhe und/oder die Steigung der schraubenförmigen Rippe 28 kann variieren.

Bei einer abgewandelten Ausführung kann die Rippenstruktur 18 auch mehrere schraubenförmige Rippen 19 aufweisen, die kreuzungsfrei oder sich kreuzend angeordnet sind.

In Figur 9 ist eine alternative Ausgestaltungsmöglichkeit für die Rippenstruktur 27 schematisch veranschaulicht. Die Rippenstruktur 27 kann mehrere einzelne Rippen 28 aufweisen, die in Richtung der Längsmittelachse A mit Abstand zueinander angeordnet sind. Die Rippen 28 sind bei dem in Figur 9 veranschaulichten Ausführungsbeispiel ringförmig, insbesondere kreisringförmig, ausgestaltet.

Jede Rippe 28 der Rippenstruktur 27 ist bei den hier beschriebenen Ausführungsbeispielen durch in eine Rippenmatrix 29 eingebettete dritte Faser 30 gebildet. Diese Ausgestaltung der wenigstens einen Rippe 28 ist beispielhaft anhand des Ausführungsbeispiels gemäß Figur 9 mit deren ringförmigen Rippen 28 veranschaulicht, kann aber auch bei den Ausführungsbeispielen gemäß der Figuren 1-3 verwendet werden.

Das Material der Rippenmatrix 29 kann dem Matrixmaterial M, dem ersten Matrixmaterial M1 oder dem zweiten Matrixmaterial M2 entsprechen. Die dritten Fasern 30 bestehen vorzugsweise aus demselben Material wie die ersten Fasern 15. Zwar sind die dritten Fasern 30 dann einem alkalischen Angriff der Baustoffmatrix B ausgesetzt, allerdings kommt es bei den dritten Fasern 30 nicht darauf an, die Zugfestigkeit des Bewehrungskörpers 10 bzw. des Bewehrungsstabes 11 herzustellen. Die Rippenstruktur 27 mit der wenigstens einen Rippe 28 muss mit dem übrigen Bewehrungskörper 10 und insbesondere dem Bündelmantel 18 eine ausreichende Verbindung aufweisen, um eine ausreichend hohe Scherbelastbarkeit für die wenigstens eine Rippe 28 herzustellen. Diese Scherbelastbarkeit wird von den Eigenschaften des Matrixmaterials dominiert und hängt weniger von der Zugfestigkeit der dritten Fasern 30 ab.

Bei den Ausführungsbeispielen gemäß den Figuren 1-3 erstrecken sich die dritten Fasern 30 im Wesentlichen in Verlaufsrichtung der schraubenförmigen Rippe 28. Beim Ausführungsbeispiel gemäß Figur 9 können sich die dritten Fasern 30 in Umfangsrichtung um die Mittelachse A des Bewehrungsstrangs 12 erstrecken.

Bei einer weiteren alternativen Ausführungsform ist es auch möglich, dass sich die dritten Fasern 30 in etwa parallel zur Längsmittelachse A erstrecken. Dies kann beispielsweise dann der Fall sein, wenn die Rippenstruktur 27 durch Materialabtrag hergestellt wird. Beispielsweise kann um den Bündelmantel 18 herum eine weitere in Umfangsrichtung U geschlossene Schicht hergestellt werden, in die anschließend eine oder mehrere Nuten oder Vertiefungen 31 eingebracht werden (beispielhaft in Fig. 9 gezeigt). Die Nuten oder Vertiefungen 31 durchsetzen den Bündelmantel 18 nicht und dringen bevorzugt auch nicht teilweise in den Bündelmantel 18 ein, der den Bündelkern 17 gegen einen alkalischen Angriff schützt. Die Tiefe der Nuten bzw. Vertiefungen 31 ist somit maximal so groß wie die Dicke der zur Bildung der Rippenstruktur 27 auf den Bündelmantel 18 aufgebrachten äußersten Schicht.

Die Erfindung betrifft einen Bewehrungskörper 10 mit wenigstens einem Bewehrungsstrang 12. Der Bewehrungsstrang 12 hat ein in eine Matrix 14 eingebettetes Faserbündel 13. Das Faserbündel 13 besteht aus ersten Fasern 15 und zweiten Fasern 16, die sich insbesondere parallel zueinander erstrecken und insbesondere nicht miteinander verwoben sind. Die ersten Fasern 15 sind in einem Bündelkern 17 des Faserbündels 13 angeordnet. In dem Bündelkern 17 sind vorzugsweise ausschließlich erste Fasern 15 vorhanden. Ein Bündelmantel 18 umschließt den Bündelkern 17 in Umfangsrichtung um eine Längsmittelachse des Bewehrungsstrangs 12 vollständig. Durch den Bündelmantel 18 sind die ersten Fasern geschützt und können beim Einbau des Bewehrungskörpers 10 in einen Baustoffkörper 19 nicht in Kontakt mit einem Baustoff des Baustoffkörpers 19 gelangen. Vorzugsweise haben die zweiten Fasern 16 eine höhere Alkalibeständigkeit als die ersten Fasern 15.

### Bezugszeichenliste:

- 10: Bewehrungskörper
- 11: Bewehrungsstab
- 12: Bewehrungsstrang
- 13: Faserbündel
- 14: Matrix
- 15: erste Fasern
- 16: zweite Fasern
- 17: Bündelkern
- 18: Bündelmantel
- 19: Baustoffkörper

- 23: Faserkern
- 24: Fasermantel
- 25: Bewehrungsgitter
- 26: Sand
- 27: Rippenstruktur
- 28: Rippe
- 29: Rippenmatrix
- 30: dritte Fasern
- 31: Vertiefung

- A: Mittelachse
- B: Baustoffmatrix
- M: Matrixmaterial
- M1: erstes Matrixmaterial
- M2: zweites Matrixmaterial
- U: Umfangsrichtung

## Patentansprüche

1. Bewehrungskörper (10)
mit wenigstens einem Bewehrungsstrang (12), der ein in eine Matrix (14) eingebettetes Faserbündel (13) aufweist, wobei
- das Faserbündel (13) erste Fasern (15) aus einem Fasermaterial und zweite Fasern (16) aus einem anderen Fasermaterial aufweist und die ersten Fasern (15) in einem Bündelkern (17) des Faserbündels (13) angeordnet sind und die zweiten Fasern (16) einen den Bündelkern (17) umschließenden Bündelmantel (18) des Faserbündels (13) bilden, und/oder
- die Matrix (14) des Bewehrungsstrangs (12) ein erstes Matrixmaterial (M1) aufweist, in das die ersten Fasern (15) eingebettet sind, und ein sich von dem ersten Matrixmaterial (M1) unterscheidendes zweites Matrixmaterial (M2) aufweist, in das die zweiten Fasern (16) eingebettet sind.

2. Bewehrungskörper nach Anspruch 1,
**dadurch gekennzeichnet, dass** das Fasermaterial der zweiten Fasern (16) eine höhere Alkalibeständigkeit aufweist als das Fasermaterial der ersten Fasern (15).

3. Bewehrungskörper nach Anspruch 1 oder 2,
**dadurch gekennzeichnet, dass** die ersten Fasern (15) E-Glas und/oder ECR-Glas enthalten.

4. Bewehrungskörper nach Anspruch 1 oder 2,
**dadurch gekennzeichnet, dass** die ersten Fasern (15) aus E-Glas oder aus ECR-Glas bestehen.

5. Bewehrungskörper nach einem der vorhergehenden Ansprüche,
**dadurch gekennzeichnet, dass** die zweiten Fasern (16) AR-Glas enthalten oder aus AR-Glas bestehen.

6. Bewehrungskörper nach einem der vorhergehenden Ansprüche,
**dadurch gekennzeichnet, dass** der E-Modul der zweiten Fasern (16) im Wesentlichen gleich groß ist wie der E-Modul der ersten Fasern (15).

7. Bewehrungskörper nach einem der vorhergehenden Ansprüche,
**dadurch gekennzeichnet, dass** die zweiten Fasern (16) einen Faserkern (23) und einen den Faserkern (23) umschließenden Fasermantel (24) aufweisen, wobei der Fasermantel (24) eine höhere Alkalibeständigkeit aufweist als der Faserkern (23).

8. Bewehrungskörper nach einem der vorhergehenden Ansprüche,
**dadurch gekennzeichnet, dass** die Matrix (14) des Bewehrungsstrangs (12) aus einem einheitlichen Matrixmaterial (M) besteht.

9. Bewehrungskörper nach einem der Ansprüche 1 bis 7,
**dadurch gekennzeichnet, dass** sich das erste Matrixmaterial (M1) von dem zweiten Matrixmaterial (M2) unterscheidet, wobei das zweite Matrixmaterial (M2) eine höhere Alkalibeständigkeit aufweist als das erste Matrixmaterial (M1).

10. Bewehrungskörper nach Anspruch 9, **dadurch gekennzeichnet, dass** zumindest das erste Matrixmaterial (M1) mindestens eine siliziumorganische Verbindung aufweist, wobei das erste Matrixmaterial (M1) eine höhere Brandbeständigkeit aufweist als das zweite Matrixmaterial (M2) .

11. Bewehrungskörper nach einem der vorhergehenden Ansprüche,
**dadurch gekennzeichnet, dass** außen am Bündelmantel (18) eine Rippenstruktur (27) mit wenigstens einer Rippe (28) angeordnet ist.

12. Bewehrungskörper nach Anspruch 11,
**dadurch gekennzeichnet, dass** die wenigstens eine Rippe (28) der Rippenstruktur (27) in eine Rippenmatrix (29) eingebettete dritte Fasern (30) aufweist.

13. Bewehrungskörper nach Anspruch 12,
**dadurch gekennzeichnet, dass** die dritten Fasern (30) aus demselben Material bestehen wie die ersten Fasern (15) oder die zweiten Fasern (16).
